# DEMANDE DE BREVET EUROPEEN

(11) **EP 0 870 941 A1**
(43) Date de publication de la demande: **14.10.1998**
(21) Numéro de dépôt: 98400471.3
(22) Date de dépôt: 27.02.1998
(51) Int. Cl.: F16D 23/06

(54) **Dispositif de synchronisation pour boîte de vitesses**

(30) Priorité: 28.02.1997 FR 9702417
(71) Demandeur: RENAULT, 92109 Boulogne-Billancourt (FR)
(72) Inventeur: Cubaud, Olivier, 95870 Bezons (FR); Membrives, Joseph, 78470 Saint remy Les Chevreuse (FR)

(57) **Abrégé**

Dispositif de synchronisation d'un pignon (1) libre en rotation autour d'un arbre (2) de boîte de vitesses avec un moyeu (3) solidaire de celui-ci, muni d'un baladeur (4) présentant au moins une rampe d'armement (6) qui repousse vers le pignon (1) un anneau de synchronisation (7) par l'intermédiaire d'un élément d'armement (8), et une denture (9) qui rencontre la denture (11) du pignon (1) après avoir traversé la denture (12) de l'anneau, caractérisé en ce que l'élément (8) présente un secteur central (13a) supportant une partie escamontable (14) et deux secteurs latéraux (13b,13c;13e,13f).

## Description

La présente invention se rapporte à un synchroniseur pour boîte de vitesses mécanique.

Elle concerne un dispositif permettant de synchroniser un pignon libre en rotation autour d'un arbre de boîte de vitesses, avec un moyeu solidaire de celui-ci.

De façon classique, les synchroniseurs de boîtes de vitesses mécaniques sont munis d'un baladeur présentant au moins une rampe d'armement qui repousse vers le pignon un anneau de synchronisation par l'intermédiaire de moyens d'armement, et une denture qui rencontre la denture du pignon après avoir traversé celle de l'anneau.

Dans les dispositifs de synchronisation connus, la fonction d'armement, consistant à repousser l'anneau de synchronisation sur le pignon, est mise en ouvre de diverses façons.

Selon une disposition classique, illustrée notamment par la publication FR 1.182.512, le baladeur peut être monté autour du moyeu sur des clavettes, présentant des rampes d'armement inclinées, et déplacées par le baladeur le long du moyeu, pour pousser l'anneau de synchronisation contre un pignon.

Les clavettes ne sont pas indispensables, et selon une autre disposition connue, le baladeur, monté directement sur la denture extérieure du moyeu, peut pousser l'anneau de synchronisation par l'intermédiaire d'une bague élastique. La publication FR 2.390.633, au nom de la demanderesse, décrit à ce sujet une bague élastique munie de protubérances radiales engagées dans une gorge circulaire du baladeur, de façon à déplacer l'anneau en direction d'un pignon sous l'action du baladeur, puis à s'effacer vis-à-vis de ce dernier, lorsque la synchronisation est réalisée.

Par ailleurs, comme indiqué dans la publication FR 1.385.860, il peut être avantageux d'assurer le maintien élastique du manchon baladeur en position centrale par une bille, repoussée radialement contre celui-ci par un ressort.

Enfin, en cumulant certaines de ces dispositions, on peut envisager de placer un ressort et une bille sous une clavette, de sorte que le ressort participe activement à l'effort d'armement avec la clavette, en repoussant celle-ci contre l'anneau par l'intermédiaire de la bille, qui reste en appui sur les rampes d'armement dans tous les stades de fonctionnement du synchroniseur.

Cette dernière solution, a cependant pour inconvénient d'être complexe et coûteuse, puisqu'elle revient à augmenter le nombre de pièces intervenant pour armer le synchroniseur. De plus, le montage de ces pièces présente certaines difficultés, liées au risque d'échappement de l'une ou l'autre de celles-ci à l'intérieur de la boîte de vitesses.

La présente invention vise à réaliser des moyens d'armement de structure simple, dont le montage en chaîne présente la fiabilité requise.

Les moyens d'armement proposés par l'invention sont constitués par un élément déformable élastiquement sous la poussée des rampes d'armement.

De préférence, cet élément présente une base entrant en contact avec l'anneau, et une partie supérieure escamotable vers l'intérieur sous la poussée des rampes d'armement.

Cette base peut avantageusement présenter un secteur central supportant la partie escamotable, et deux secteurs latéraux assurant le guidage axial de l'ensemble sur le moyeu.

Selon un mode de réalisation privilégié, les moyens d'armement sont constitués par une pièce d'un seul tenant, obtenue à partir d'une feuille de matériau suffisamment rigide pour être mise en forme par pliage, et transmettre à l'anneau la poussée des rampes d'armement.

En variante, la base de l'élément déformable peut présenter un secteur central supportant la partie escamotable et deux secteurs latéraux assurant le maintien de l'ensemble sous les deux cônes des pignons fous.

D'autres caractéristiques et avantages de l'invention apparaîtront clairement à la lecture de la description suivante d'un mode de réalisation particulier de celle-ci, en liaison avec les dessins annexés, sur lesquels :
- la figure 1 est une coupe longitudinale d'un premier dispositif de synchronisation conforme à l'invention,
- la figure 2 est une vue en perspective des moyens d'armement de ce dispositif, avant leur montage sur le moyeu du synchroniseur,
- la figure 3A illustre la disposition de ces moyens sur le moyeu,
- la figure 3B est une coupe transversale du moyeu de la figure 3A, effectuée au niveau des moyens d'armement,
- les figures 4A, 4B, 4C mettent en évidence le comportement des moyens d'armement des figures 1 à 3B, lors du fonctionnement du synchroniseur.
- la figure 5 est une coupe longitudinale d'un second dispositif de synchronisation conforme à l'invention,
- la figure 6 est une vue en perspective des moyens d'armement de la figure 6, avant leur montage sur le moyeu du synchroniseur, et
- la figure 7 est une coupe selon A de la figure 5.

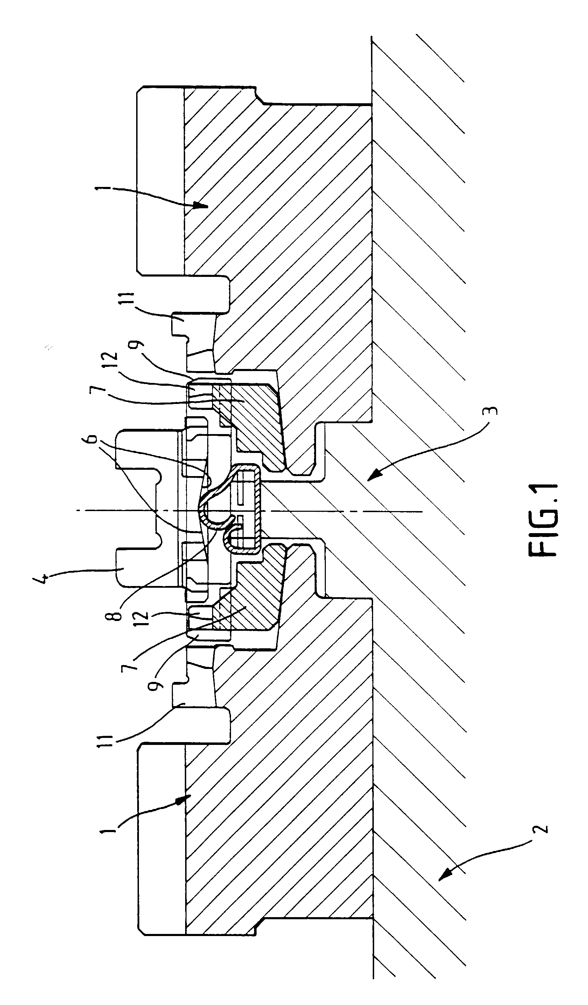

Sur la figure 1, on a représenté un dispositif de synchronisation, ou synchroniseur, comportant de façon classique un moyeu 3 solidaire d'un arbre rotatif 2, tel que l'arbre secondaire d'une boîte de vitesses mécanique. Ce synchroniseur est un synchroniseur double, muni de deux anneaux de synchronisation 7, déplaçables respectivement en direction d'un premier et d'un second pignon de vitesse 1, pour engager deux rapports distincts sous la commande d'un baladeur 4, sollicité par l'intermédiaire d'un mécanisme de commande non représenté, à partir du levier de changement de vitesses du véhicule.

Le baladeur 4 présente deux dentures latérales 9, destinées à rencontrer les dentures 11 des pignons 1, après avoir traversé les dentures 12 des anneaux de synchronisation 7. La face inférieure du baladeur 4 présente deux rampes d'armement symétriques 6 inclinées, coopérant avec les moyens d'armement 8 faisant l'objet de l'invention.

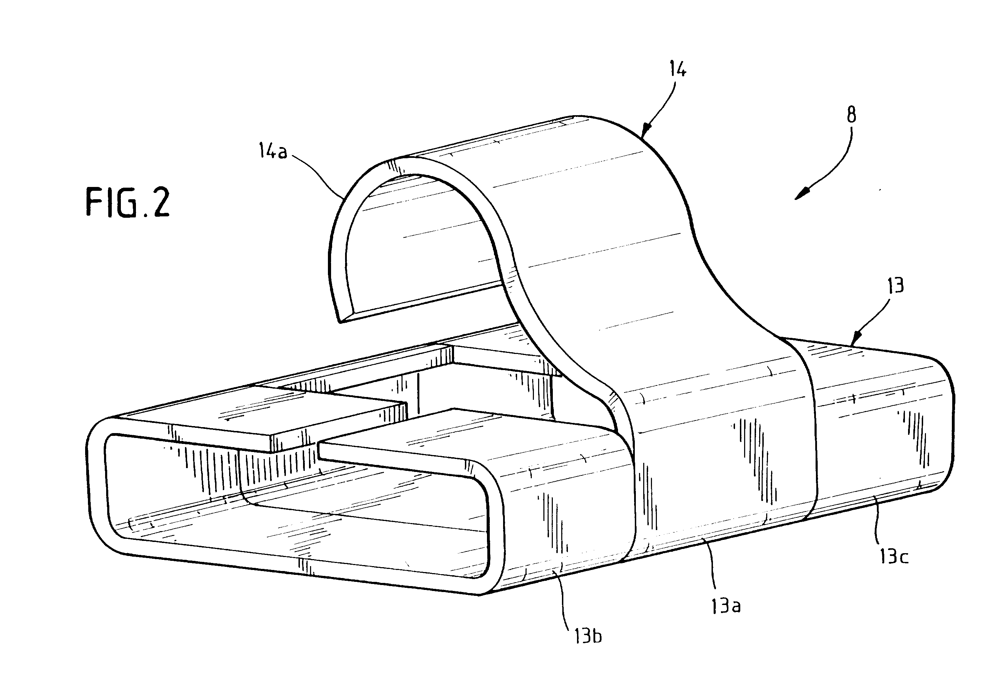

En se reportant à la figure 2, on voit que les moyens d'armement 8 sont constitués par un seul élément dont la partie supérieure 14 est en contact avec la jonction des deux rampes d'armement 6, et dont la base 13 est distante des anneaux de synchronisation 7 sur la figure 1, qui illustre la position de repos du synchroniseur.

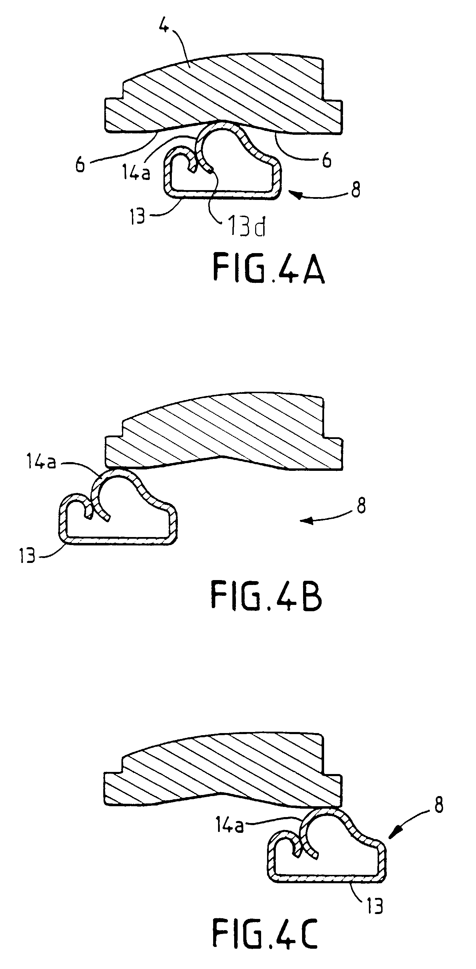

Comme indiqué sur les figures 4B et 4C, la partie supérieure 14 de l'élément 8 est déformable élastiquement de façon à pouvoir s'escamoter vers l'intérieur sous la poussée des rampes d'armement 6, lorsqu'il est entraîné par l'une de celles-ci en direction d'un anneau 7, tandis que sa base 13 entre en contact avec l'anneau 7 et pousse celui-ci en direction d'un pignon 1, pour armer le synchroniseur.

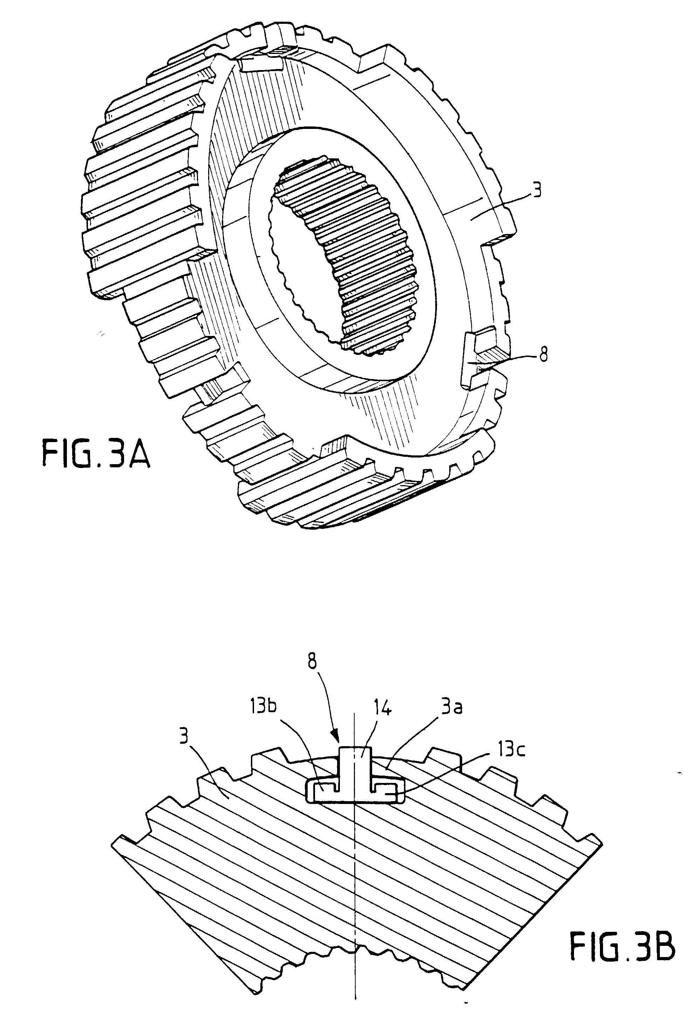

La figure 2 met en évidence que la base 13 de l'élément 8 présente un secteur central 13a supportant la partie escamotable 14, et deux secteurs latéraux 13b, 13c. Sur les figures 3A et 3B, on voit que les secteurs latéraux 13b, 13c assurent le guidage axial de l'élément 8 sur le moyeu 3, en étant engagés sous des rebords 3a de celui-ci.

Selon un mode de réalisation particulier de l'invention, l'élément 8 peut être une pièce d'un seul tenant obtenue à partir d'une feuille de matériau suffisamment rigide pour être mise en forme par pliage, et transmettre à un anneau 7 la poussée d'une rampe d'armement 6.

Dans ce cas, la partie escamotable 14 sera avantageusement découpée dans la base 13 de l'élément 8. Comme indiqué sur la figure 2, la partie escamotable 14, se découpe alors dans le secteur central 13a de la base 13.

L'élasticité souhaitée est obtenue dans de bonnes conditions si l'extrémité 14a de la partie escamotable 14 est recourbée sur elle-même, de façon à prendre appui sur la base 13 de l'élément 8 (comme indiqué sur la figure 1 et les figures 4A à 4C), sous la poussée des rampes d'armement 6.

Dans ce cas, la zone d'extrémité 13d de la base 13, sur laquelle vient s'appuyer la partie escamotable 14 sera également recourbée sur elle-même.

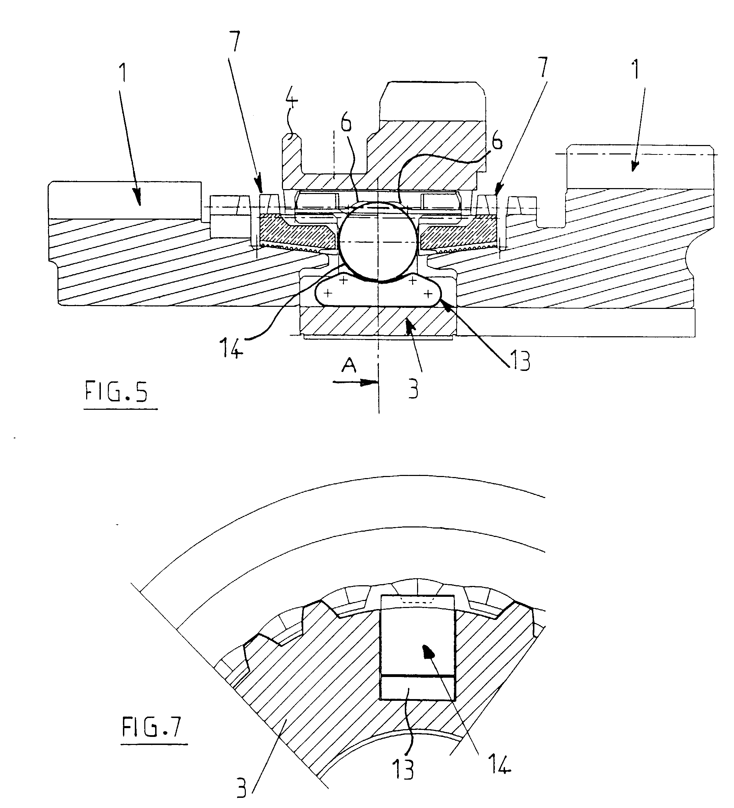

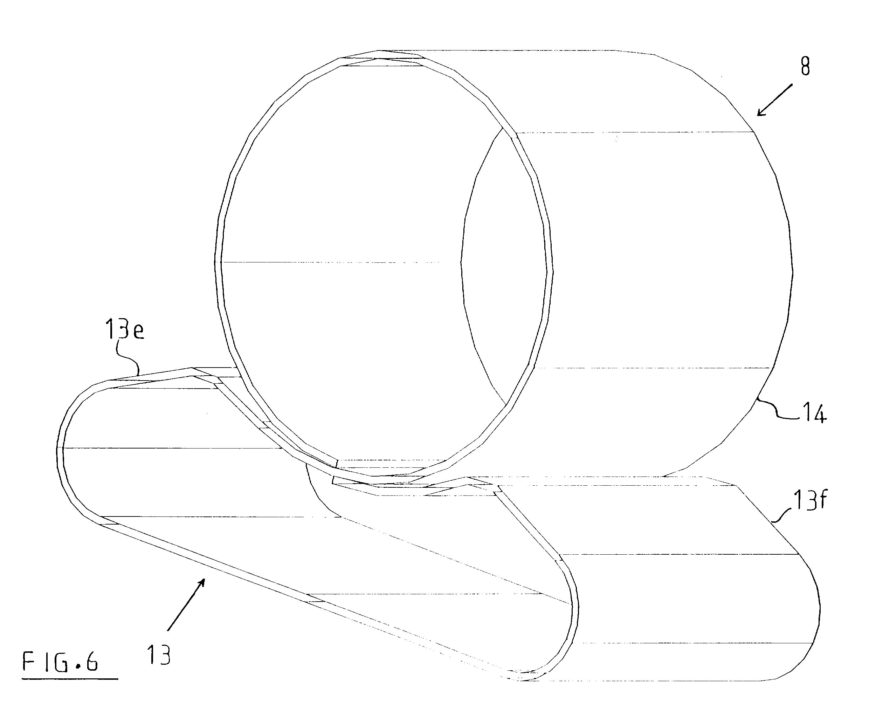

L'élément d'armement 8 illustré par les figures 5 à 7 présente un secteur central 13a supportant une partie escamotable 14 et deux secteurs latéraux 13e, 13f. Ces derniers assurent le maintien de l'élément d'armement 8 en étant engagés sous les deux cônes des pignons fous 11.

Comme précédemment l'élément d'armement 8 peut être une pièce d'un seul tenant obtenue à partir d'une feuille de matériau suffisamment rigide pour être mise en forme par pliage, et transmettre à un anneau 7 la poussée d'une rampe d'armement 6.

L'extrémité 14a de sa partie escamotable 14 peut également être recourbée sur elle-même de façon à prendre appui sur sa base 13, sous la poussée des rampes d'armement 8.

En conclusion, il faut souligner que les moyens d'armement proposés par l'invention sont constitués d'une seule pièce, de fabrication particulièrement simple. Ces moyens participent activement à l'effort d'armement en se déformant élastiquement sous une rampe du baladeur lorsqu'ils déplacent un anneau de synchronisation. Par ailleurs, leur élasticité assure le centrage de ces moyens sous le baladeur lorsque le synchroniseur n'est pas sollicité. Enfin, leur montage dans la boîte de vitesses ne présente aucune difficulté, ni risque de perte à l'intérieur de celle-ci.

## Revendications

1. Dispositif de synchronisation d'un pignon (1) libre en rotation autour d'un arbre (2) de boîte de vitesses avec un moyeu (3) solidaire de celui-ci, muni d'un baladeur (4) présentant au moins une rampe d'armement (6) qui repousse vers le pignon (1) un anneau de synchronisation (7) par l'intermédiaire d'un élément d'armement (8), et une denture (9) qui rencontre la denture (11) du pignon (1) après avoir traversé la denture (12) de l'anneau, caractérisé en ce que l'élément (8) présente un secteur central (13a) supportant la partie escamotable (14) et deux secteurs latéraux (13b, 13c ; 13e, 13f).

2. Dispositif de synchronisation selon la revendication 1, caractérisé en ce que les secteurs latéraux (13b, 13c) sont engagés sous les rebords (3a) du moyeu (3), de façon à assurer le guidage axial de l'élément d'armement (8) sur celui-ci.

3. Dispositif de synchronisation selon la revendication 1, caractérisé en ce que les secteurs latéraux (13e, 13f) sont engagés sous les cônes des deux pignons fous (11) de façon à assurer le maintien de l'élément d'armement (8) sous ces derniers.

4. Dispositif de synchronisation selon la revendication 1, 2 ou 3, caractérisé en ce que l'élément (8) présente une base (13) entrant en contact avec l'anneau (7), et une partie supérieure (14) escamotable vers l'intérieur sous la poussée des rampes d'armement (6).

5. Dispositif de synchronisation selon l'une des revendications précédentes, caractérisé en ce que l'élément (8) est une pièce d'un seul tenant obtenue à partir d'une feuille de matériau suffisamment rigide pour être mise en forme par pliage et transmettre à l'anneau (7) la poussée des rampes d'armement (6).

6. Dispositif de synchronisation selon la revendication 1, 2, 4 ou 5, caractérisé en ce que la partie escamotable (14) de l'élément (8) est découpée dans la base (13) de celui-ci.

7. Dispositif de synchronisation selon la revendication 5 ou 6, caractérisé en ce que la partie escamotable (14) est découpée dans le secteur central (13a) de la base (13).

8. Dispositif de synchronisation selon l'une des revendications 4 à 7, caractérisé en ce que l'extrémité (14a) de la partie escamotable (14) est recourbée sur elle-même, de façon à prendre appui sur la base (13) de l'élément (8), sous la poussée des rampes d'armement (6).

9. Dispositif de synchronisation selon l'une des revendications précédentes, caractérisé en ce que la zone d'extrémité (13d) de la base (13), sur laquelle vient s'appuyer la partie escamotable (14) est recourbée sur elle-même.
